# EUROPEAN PATENT APPLICATION

(11) **EP 0 578 861 A1**
(43) Date of publication of application: **19.01.1994**
(21) Application number: 92112270.1
(22) Date of filing: 17.07.1992
(51) Int. Cl.: H04M 11/08

(54) **Device for multiplex telephone communication**

(71) Applicant: RICOS CO., LTD., Miyakojima-ku, Osaka (JP)
(72) Inventor: Tsumura, Mihoji, Miyakojima-ku, Osaka (JP); Taniguchi, Shinnosuke, Higashinari-ku, Osaka (JP)
(74) Representative: Hering, Hartmut, Dipl.-Ing.

(57) **Abstract**

A precondition is the use of a device for communication during the idle time on a telephone line (40). It is also necessary for the outgoing transmission side to be provided with a plurality of transmission means (C1,C2,C3) to output digital transmission signals, a first modem (15) to convert the digital signals received from each of said transmission means (C1,C2,C3) to analog signals and a multiplexing means (C5,U5) to multiplex each of the transmission signals received from said first modem (15) and output them to a telephone line. It is further necessary for the incoming transmission side to be provided with a dividing means (C6,U6) to divide the multiplexed signals received from said telephone line (40) into a plurality of component transmission signals, a second modem (35) to convert each of the plurality of transmission signals received from said dividing means (C6,U6) into digital signals and a receiving means (13) which operates in response to the transmission signals received from the second modem (35).

In the system outlined above, transmission signals are initially output in digital form and then converted to analog form by a modem. However, if the transmission speed of the modem is set to a suitably slow rate, the bandwidth occupied at the point of output from the modem can be substantially narrowed with the result that the band available on the telephone line (40) can be put to more effective use by enabling the simultaneous transmission of a plurality of signals on a single telephone. This in turn enables a significant enlargement of the scope of information transfer. In this way it is possible not only to increase the efficiency with which a telephone line (40) is used but also to enlarge the overall scope of data transfer by facilitating the simultaneous idle time transmission of a plurality of signals on a single telephone line (40) without mutual interference.

One method of multiplexing involves the arrangement of transmission signals along the frequency axis.

A second method of multiplexing involves the arrangement of transmission signals along the time axis.

## Description

### BACKGROUND OF THE INVENTION

### 1. FIELD OF THE INVENTION

The invention relates to a communication device for the transmission of signals using the idle time on a telephone line connecting the switching system of a telephone exchange and the telephone in a user's home.

### 2. DESCRIPTION OF THE PRIOR ART

Telephone communication normally involves the connection of the switching system of a telephone exchange and a user's telephone through the medium of a telephone line. When the telephone receiver is lifted off the hook, a loop is formed through the telephone line between the telephone and the exchange's switching system making voice communication possible by the transmission of signals around said loop. There are known communication devices which make use of telephone line idle time for the unidirectional transmission of broadcast data in the form of, for example, music to a user's home. A communication device of this type calls for the installation in a telephone exchange of an exchange device which can then be used to switch the telephone line selectively between the switching system of the exchange itself and a transmission means which is installed in an independent center and which is used for the transmission of analog signals in the form of speech or music. Each user's home is fitted with a receiving means with a speaker, which is connected to the telephone line and which, when the receiver is lifted off the hook, connects the exchange device to the exchange's switching system to enable voice communication or, when the receiver is placed on the hook, switches the exchange device to said transmission means which transmits signals down the telephone line to each receiving means.

In practice, a plurality of transmission means are normally connected to a single exchange device which can be turned on and off or switched selectively between said transmission means (in order to change channels) by the remote operation of each receiving means.

However, although a conventional idle time communication device normally permits the selection of any one of a plurality of possible transmission signals, once this choice has been made, transmission is limited to the selected signal only and other signals can not be transmitted at the same time. This makes it difficult to meet the modern demand for increased data transmission.

The simple answer to this problem would seem to be to superimpose a number of transmission signals on top of each other. However, in the case of audio signals, for example, if the signals were to be left in analog form, this would mean using the whole of the telephone waveband (for example, 0.3 to 3.4 KHz) with the result that the superimposition of additional signals would give rise to interference.

If, on the other hand, said audio signals can be generated in the form of digital signals and transmitted through the medium of a low-speed modem, the bandwidth occupied at the point of output from the modem will be much narrower.

### SUMMARY OF THE INVENTION

It is the object of this invention to devise a method for the transmission of digital signals whereby effective use is made of the whole waveband available for use on a telephone line in order to transmit more than one such digital signal on a single line.

A precondition for the achievement of the above object is the use of a device for communication during the idle time on a telephone line. It is also necessary for the outgoing transmission side to be provided with a plurality of transmission means to output digital transmission signals, a first modem to convert the digital signals received from each of said transmission means to analog signals and a multiplexing means to multiplex each of the transmission signals received from said first modem and output them to a telephone line. It is further necessary for the incoming transmission side to be provided with a dividing means to divide the multiplexed signals received from said telephone line into a plurality of transmission signals, a second modem to convert each of the plurality of transmission signals received from said dividing means into digital signals and a receiving means which operates in response to the transmission signals received from the second modem.

In the system outlined above, transmission signals are initially output in digital form and then converted to analog form by a modem. However, if the transmission speed of the modem is set to a suitably slow rate, the bandwidth occupied at the point of output from the modem can be substantially narrowed with the result that the band available on the telephone line can be put to more effective use by enabling the simultaneous transmission of a plurality of signals on said single telephone line. This in turn enables a significant enlargement of the scope of information transfer. In this way it is possible not only to increase the efficiency with which a telephone line is used but also to enlarge the overall scope of data transfer by facilitating the simultaneous idle time transmission of a plurality of signals on a single telephone line without mutual interference.

One of the methods of multiplexing which we propose involves the arrangement of transmission signals along the frequency axis. More specifically, this type of multiplexing means comprises a plurality of upstream modulators for the purpose of modulating sub-carriers in accordance with the transmission signals received from the first modem, an adder to sum the output received from said upstream modulators and a downstream modulator to modulate the main carrier in accordance with the output received from said adder. The dividing means comprises an upstream demodulator for the purpose of receiving multiplexed signals from the telephone line and of demodulating the main carrier and a downstream demodulator to demodulate each of the corresponding sub-carriers.

A second method of multiplexing which we propose involves the arrangement of transmission signals along the time axis. More specifically, this second type of multiplexing means comprises a first switching means to accept all the output from the first modem and to switch and output each signal periodically and in sequence, and a modulator, which operates in response to a timing signal, to modulate a carrier in accordance with the transmission signals received from the first switching means. The dividing means comprises a demodulator to receive the multiplexed signals from the telephone line and demodulate them in response to a timing signal, and a second switching means to switch and output periodically and in sequence the signals received from the demodulator.

### BRIEF DESCRIPTION OF THE DRAWINGS

Figures 1 to 5 illustrate the first preferred embodiment of the invention.

Figure 1 is a block diagram showing the configuration of the whole of the first preferred embodiment of the invention.

Figure 2 is a block diagram of the center transmission means.

Figure 3 is a block diagram of the user's home transmission means.

Figure 4 is a block diagram of the multiplexing means.

Figure 5 is a block diagram of the dividing means.

Figures 6 and 7 illustrate the second preferred embodiment of the invention.

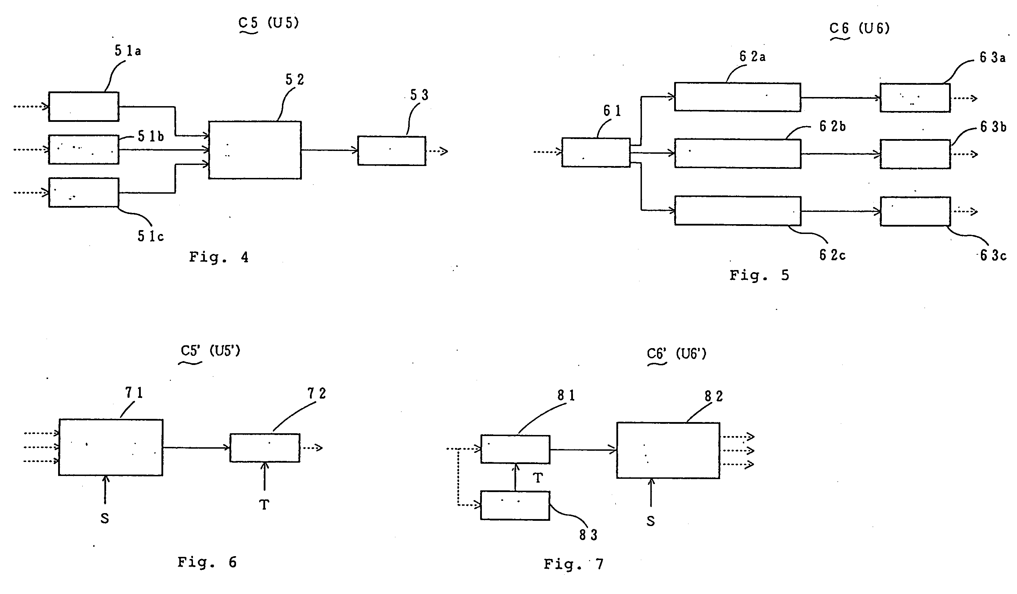

Figure 6 is a block diagram of the multiplexing means.

Figure 7 is a block diagram of the dividing means.

### DETAILED DESCRIPTION OF THE PREFERRED EMBODIMENTS

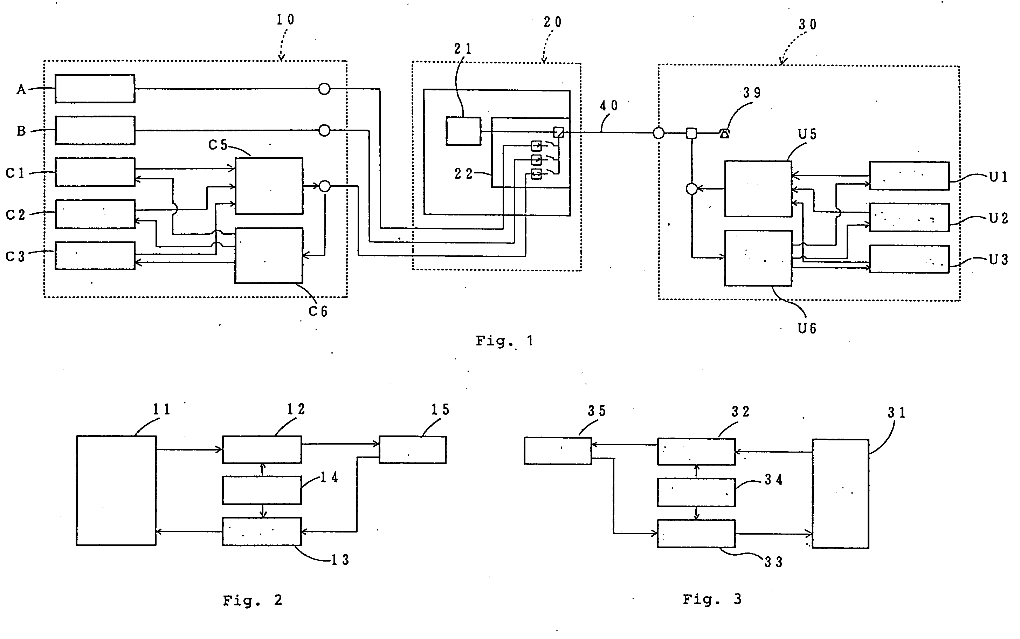

There follows a description of the first preferred embodiment of the invention. Figure 1 shows the multiplexing device of the first preferred embodiment. In the figure, 20 is a telephone exchange and 30 is a user's home, said telephone exchange being equipped with a switching system 21 and said user's home being equipped with a telephone 39. Said switching system 21 is connected to said telephone 39 by an analog telephone line 40. When the telephone 39 receiver is lifted off the hook, a loop is formed with the switching system 21 by way of the telephone line 40, the subsequent transmission of signals around said loop making voice communication possible.

10 is a center which is independent of said telephone exchange, said center being equipped with center units A,B, which transmit speech or music, for example, in the form of digital signals. From here on, these speech and music transmissions will be referred to as "broadcast signals" in order to distinguish them from "transmission signals". Said center 10 is also equipped with a first transmission means C1, a second transmission means C2 and a third transmission means C3, which transmit speech and music transmission signals in digital signal form. The block configuration of the transmission means C1,C2,C3 is illustrated in Figure 2 in which 11 is a host computer which stores and processes upload and download data. 12 is a transmission means which reads download data out of the host computer 11. 15 is a modem which converts download data received from the transmission means 12 into analog signal form and outputs it to the telephone line 40. Said modem 15 also converts analog transmission signals received from said telephone line 40 into the form of digital signals. 13 is a receiving means which reads upload data out of the output received from said modem 15 and inputs it to the host computer 11. 14 is a protocol controller which controls the operations of the transmission means 12 and the receiving means 13 in such a way as to ensure that each of said means transmits or receives signals in accordance with the specified protocol. Said center 10 is also equipped with a multiplexing means C5 which multiplexes the plurality of transmission signals output by way of the modem 15 from the aforementioned transmission means C1,C2,C3 and outputs them to the telephone line 40. Said center 10 is further equipped with a dividing means C6 which divides multiplexed signals received from said telephone line 40 into a plurality of transmission signals.

The aforementioned telephone exchange 20 is equipped with an exchange unit 22 which has the capacity to switch between, and connect the telephone line 40 selectively to, (1) the switching system 21, (2) the center unit A, (3) the center unit B and (4) the multiplexing means C5 and dividing means C6.

The aforementioned user's home 30, on the other hand, is equipped with a first transmission means U1, a second transmission means U2 and a third transmission means U3, all of which transmit data in the form of digital signals. The block configuration of said transmission means U1,U2,U3 is shown in Figure 3 in which 31 is a terminal which stores and processes upload and download data, 32 is a transmission means which reads upload data out of said terminal 31, and 35 is a modem which converts upload data received from said transmission means 32 into analog signals and outputs them to the telephone line 40 while at the same time converting incoming analog transmission signals from said telephone line 40 to digital form. 33 is a receiving means which reads download data out of the output received from said modem 35 and inputs it to said terminal 31. 34 is a protocol controller which controls the operations of the transmission means 32 and the receiving means 33 in such a way as to ensure that each of said means transmits or receives signals in accordance with the specified protocol. Said user's home 30 is also equipped with a multiplexing means U5 which multiplexes the plurality of transmission signals output by way of the modem 35 from the aforementioned transmission means U1,U2,U3 and outputs them to the telephone line 40. Said user's home 30 is also equipped with a dividing means U6 which divides multiplexed signals received from said telephone line 40 into a plurality of component transmission signals.

The aforementioned transmission means 12,32 and receiving means 13,33 each have the capacity to carry out packet communication. In other words, said transmission means 12,32 split up data which is input, insert flags, identifiers, control data and error control codes as appropriate and reassemble said data in packet form. Said receiving means 13,33, on the other hand, select packets addressed either to the host computer or to the terminal from incoming transmission signals and extract and output the required data from said packets. The modems 15,35 both support full duplex communication. The multiplexing means C5,U5 and the dividing means C6,U6 each uses the frequency division multiplex system.

In the basic configuration outlined above, when the telephone receiver is lifted off the hook, the exchange unit 22 is switched over to the exchange switching system to enable speech communication. On the other hand, when the telephone receiver is placed on the hook and the exchange unit 22 is switched over to the position settings outlined below, the idle time on the telephone line 40 can be used for the operations described under each switch setting.

### (1) Switch set to the center unit A

Broadcast signals from the center unit A are received by one or other of the first, second and third transmission means U1,U2,U3 by way of the dividing means U6.

### (2) Switch set to the center unit B

Broadcast signals from the center unit B are received by one or other of the first, second and third transmission means U1,U2,U3 by way of the dividing means U6.

### (3) Switch set to the multiplexing means C5 and dividing means C6

The digital transmission signals output from the transmission means 12 inside each of the center 10 transmission means C1,C2,C3 are converted to analog signals by the modem 15 and then multiplexed in the multiplexing means C5 and output to the telephone line 40. In the user's home 30, said multiplexed signals are divided into a plurality of component transmission signals by the dividing means U6 after which they are converted to analog signals by the modem 35 of the transmission means U1,U2,U3 and then input to the receiving means 33 from which they are subsequently input to the terminal 31. In this case, the modem 15 of the transmission means C1,C2,C3 plays the role of the first modem and the modem 35 of the transmission means U1,U2,U3 plays the role of the second modem.

Similarly, the digital transmission signals output from the transmission means 32 inside each of the user's home 30 transmission means U1,U2,U3 are converted to analog signals by the modem 35 and then multiplexed in the multiplexing means U5 and output to the telephone line 40. In the center 10, said multiplexed signals are divided into a plurality of component transmission signals by the dividing means C6 after which they are converted to analog signals by the modem 15 of the transmission means C1,C2,C3 and then input to the receiving means 13 from which they are subsequently input to the host computer 11. In this case, the modem 35 of the transmission means U1,U2,U3 plays the role of the first modem and the modem 15 of the transmission means C1,C2,C3 plays the role of the second modem.

There now follows a description of the block configuration of the aforementioned multiplexing means C5,U5. As shown in Figure 4, said multiplexing means C5,U5 incorporate each of the following elements.

### 1/ Upstream modulators 51a,51b,51c

The upstream modulators modulate sub-carriers in accordance with the transmission signals received from the transmission means C1,C2,C3,U1,U2,U3.

### 2/ Adder 52

The adder sums the output of each of the upstream modulators 51a,51b,51c.

### 3/ Downstream modulator 53

The downstream modulator modulates the main carrier in accordance with the output received from the adder 52. The next section describes the block configuration of the aforementioned dividing means C6,U6. As shown in Figure 5, said dividing means C6,U6 incorporate each of the following elements.

### 4/ Upstream demodulator 61

The upstream demodulator receives transmission signals and demodulates the main carrier.

### 5/ Band-pass filters 62a,62b,62c

The band-pass filters 62a,62b,62c receive the output from the upstream demodulator 61 and allow only such frequency bands to pass as correspond to transmission signals.

### 6/ Downstream demodulators 63a,63b,63c

The downstream demodulators 63a,63b,63c receive the output of each of the band-pass filters 62a,62b,62c and demodulate each of the sub-carriers accordingly.

Thus, using the first preferred embodiment of the invention outlined above, it is possible, when the exchange device 22 is switched over to the multiplexing means C5 and the dividing means C6, for the center 10 transmission means C1,C2,C3 and the user's home 30 transmission means U1,U2,U3 to engage in one-to-one bidirectional packet communication with each other.

In this case, the transmission signals are initially stored in the host computer 11 in digital form and subsequently converted to analog signals by the modem 15. Providing the modem is set to a suitably low speed, the bandwidth occupied by the signals at the point of output from the modem will be correspondingly reduced. To be more precise, when signals such as audio signals are converted from digital to analog form, the most important part of the spectrum can be confined to 2/T (where T is the bit rate). In other words, at a rate of 1200 bps, for example, T = 1/1200 which corresponds to an occupied bandwidth of 2400 Hz. If the speed of data transfer is reduced to 600 bps, however, the occupied bandwidth is also reduced to 1200 Hz. In the latter case, this would leave another 1800 Hz of the full telephone bandwidth of approximately 3 KHz for the transmission of other signals. It is thus possible to make more effective use of the available bandwidth of the aforementioned telephone line 40 by using said single line 40 to carry more than one transmission signal at the same time, thereby augmenting the overall scope of data transfer. In this case, of course, since the speed of data transmission is necessarily slower the more the occupied bandwidth is compressed, it is also necessary to have regard to the types of signals to be transmitted when selecting an appropriate transmission speed. In the case of MIDI data signals, for example, a terminal is able to read signals received later, even while earlier signals are in course of reproduction. This means in turn that a fairly slow transmission speed setting does not create any practical impediment to the musical performance.

Moreover, since the use of packet communication enables bidirectional communication to take place, this also means that individual channels can be used for entirely different purposes. The operations of the aforementioned terminal 32 could, for example, be controlled by the transmission of control signals without at the same time interrupting the service represented by the flow of broadcast signals.

Again, by making use of the multiple addressing capacity of this communication device, it is possible to transmit signals to all terminals at the same time.

There follows a description of the second preferred embodiment of the invention. The basic configuration of the second preferred embodiment is the same as that of the first preferred embodiment, the only differences being in the configuration of the multiplexing means and of the dividing means. More specifically, in place of the frequency division multiplex system employed in the first preferred embodiment, the second preferred embodiment makes use of the time division multiplex system. First, we will describe the block configuration of the multiplexing means C5',U5'. As shown in Figure 6, the multiplexing means C5',U5' incorporates each of the following elements.

### 1/ First switching means 71

The first switching means 71 receives transmission signals from the first, second and third transmission means C1,C2,C3 which it subsequently switches periodically and in sequence. In other words, it has a switching and output function. The frequency with which switching is carried out is set in accordance with the different types of transmission signals with sequential operation being carried out in response to a synchronising signal S.

### 2/ Modulator 72

The modulator 72 accepts the output of transmission signals from the first switching means 71, said signals then being used, in response to a timing signal T, in order to modulate the carrier.

There now follows a description of the block configuration of the dividing means C6',U6'. As shown in Figure 7, the dividing means C6',U6' incorporate each of the following elements.

### 3/ Demodulator 81

The demodulator 81 receives transmission signals which it demodulates in response to a timing signal T.

### 4/ Second switching means 82

The second switching means 82 receives transmission signal output from the demodulator 81 which it subsequently switches periodically and in sequence in accordance with the synchronisation signal S. In other words, it has a switching and output function.

### 5/ Synchronicity regenerator 83

The synchronicity regenerator 83 regenerates the synchronisation signals S from the synchronisation data strings, which are added to the data transmission signals it receives, and then inputs them to the demodulator 81.

Thus, using the second preferred embodiment of the invention outlined above, just as with the first preferred embodiment, it is possible, when the exchange device 22 is switched over to the multiplexing beans C5' and the dividing means C6', for the center 10 transmission means C1,C2,C3 and the user's home 30 transmission means U1,U2,U3 to engage in one-to-one bidirectional packet communication with each other.

In this case, the transmission signals are initially stored in the host computer 11 in digital form and subsequently converted to analog signals by the modem 15. Providing the modem is set to a suitably low speed, the bandwidth occupied by the signals at the point of output from the modem will be correspondingly reduced. Thus, although the switching operation will result in a broadening of the occupied bandwidth, it is still possible to make more effective overall use of the available bandwidth of the aforementioned telephone line 40 by using said single line 40 to carry more than one transmission signal at the same time, thereby augmenting the overall scope of data transfer.

It is a common feature of both the first and the second preferred embodiments of the invention outlined above, that the following type of download data can be sent from the host computer 11 to the terminal 31.

### (I) MIDI data

When MIDI data is transmitted, a MIDI sound source is used as the receiving means. Typically, this type of MIDI data might consist of music data for use with a karaoke system.

### (II) Image data

When image data is transmitted, an image device is used as the receiving means. Typically, this type of data might consist of image data for use with a karaoke system. In this case it would, of course, be necessary to synchronise the transmission and receipt of the MIDI and image data with each other.

### (III) Line charge data

### (IV) List of music titles

In the preferred embodiments outlined above, we have confined download data to four specific types. It would be perfectly acceptable, however, to increase the number of download data types. In a configuration of the type illustrated in the first preferred embodiment, there will of course also be a corresponding increase in the numbers of upstream modulators 51a,51b,51c incorporated into the multiplexing means C5,U5 and in the numbers of band-pass filters 62a,62b,62c and downstream modulators 63a,63b,63c incorporated into the dividing means C6,U6. Similarly, in a configuration of the type illustrated in the second preferred embodiment, there will be an increase in the number of switching functions of the switching means 71,82 corresponding to the increase in the number of types of data carried.

The following types of upload data can similarly be sent from the terminal 31 to the host computer 11.
(a) Confirmation signal from the terminal 31 to confirm that download data from the host computer 11 has duly arrived at said terminal 31.
(b) Music request signal requesting download of specified music and image data.
(c) ID signal from the terminal 31 to confirm the identity of said terminal 31, thereby simplifying the terminal control operations carried out by the center 10.
(d) Fault signal from the terminal 31 to advise the center 10 that a fault state has occurred in said terminal 31.
(e) Operation signal from the terminal 31 to advise the center 10 of the operating status of said terminal 31.

In the two preferred embodiments of the invention outlined above, it has been assumed that communication between the host computer 11 and the terminal 31 will take the form of one-to-one bidirectional packet communication. However, the communication device into which the present invention is incorporated need not be restricted to one which enables bidirectional communication. Provided only that it has the capacity to make use of idle telephone line time for communication purposes, a unidirectional communication device (enabling, for example, unidirectional communication from the host computer 11 to the terminal 31 and also unidirectional communication from the terminal 31 to the host computer 11) would be equally acceptable.

## Claims

1. A device for multiplex telephone communication that makes use of the idle time on a telephone line (40), which connects the switching system (21) of a telephone exchange (20) with the telephone (39) in a user's home, for the transmission of signals,
the outgoing transmission section of said device being equipped with
(I) a plurality of transmission means (C1,C2,C3) for the output of digital transmission signals,
(II) a first modem (15) for conversion to analog form of the digital transmission signals received from said transmission means, (C1,C2,C3) and
(III) a multiplexing means (C5,U5) for the multiplexing and output to the aforementioned telephone line (40) of the plurality of analog transmission signals received from said first modem (15), and
the incoming transmission section (12) of said device being equipped with
(IV) a dividing means (C6,U6) for the division of the multiplex signals received from said telephone line (40) into a plurality of transmission signals,
(V) a second modem (35) convert the analog transmission signals output by said dividing means (C6,U6) to digital form, and
(VI) a receiving means (13) which operates in accordance with the plurality of digital signals received from said second modem (35).

2. The device for multiplex telephone communication according to claim 1, which supports packet communication and in which
the aforementioned transmission means (C1,C2,C3) incorporates a function to split up input data, insert flags and identifiers and then reassemble said data in packet form, and in which
the aforementioned receiving means (13) incorporates a function to select from incoming transmission signals packets addressed to specified destinations and to extract data from said packets.

3. The device for multiplex telephone communication according to claim 1 or 2 which supports full duplex communication and which
further comprises a host computer (11) and a terminal for the storage and processing of upload and download data,
said host computer (11) being connected to the first aforementioned transmission means (C1,C2,C3) and said terminal being connected to the first aforementioned receiving means (13), and
said terminal being also connected to the second aforementioned transmission means (U1,U2,U3) and said host computer (11) being also connected to the second aforementioned receiving means (13).

4. The device for multiplex telephone communication according to anyone of the preceding claims in which
the aforementioned multiplexing means (C5,U5) comprises
(a) a plurality of upstream modulalors (51a,51b,51c) which modulate sub-carriers in accordance with transmission signals received from the aforementioned (first) modem (15),
(b) an adder (52) which sums the output received from each of said upstream modulators, (51a,51b,51c) and
(c) a downstream modulator (53) which modulates the main carrier in accordance with the output received from said adder, (52) and in which
the aforementioned dividing means (C6,U6) comprises
(d) an upstream demodulator (61) which receives multiplex signals from the aforementioned telephone line (40)and demodulates said main carrier, and
(e) a plurality of downstream demodulators (63a,63b,63c) which receive the output of said upstream demodulator (61) and demodulate each of the corresponding sub-carriers.

5. The device for multiplex telephone communication according to claim 4 which further comprises
a plurality of band-pass filters (62a,62b,62c) which receive the output of said upstream demodulator (61) and let through only the frequency bands which correspond to transmission signals.

6. The device for multiplex telephone communication
according to anyone of the preceding claims in which
the aforementioned multiplexing means comprises
(a) a first switching means (71) which receives all the transmission signals output by said first modem (15), which it then switches and outputs periodically and in sequence, and
(b) a modulator (72) which modulates the aforementioned carriers in response to timing signals and in accordance with the aforementioned transmission signals received from said first switching means (71), and in which
the aforementioned dividing means (C6',U6') comprises
(c) a demodulator (81) which demodulates in response to timing signals the multiplexed signals received from the aforementioned telephone line (40), and
(d) a second switching mean (82) which switches and outputs the signals received from said demodulator (81) periodically and in sequence.

7. The device for multiplex telephone communication according to claim 6 which further comprises
a synchronicity regenerator (83) which receives said transmission signals, regenerates the synchronization signals from the synchronisation data string added to the data and outputs them to the aforementioned demodulator (81).
